Europäisches Patentamt

European Patent Office

Office européen des brevets

(19)

(11) **EP 1 473 709 A1**

(12) **DEMANDE DE BREVET EUROPEEN**

(43) Date de publication:
**03.11.2004 Bulletin 2004/45**

(51) Int Cl.⁷: **G10L 17/00**, G08B 13/16

(21) Numéro de dépôt: **04354019.4**

(22) Date de dépôt: **03.05.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(30) Priorité: **02.05.2003 FR 0305414**

(71) Demandeur: **Miriad Technologies
75008 Paris (FR)**

(72) Inventeur: **Azencott, Robert
75010 Paris (FR)**

(74) Mandataire: **de Beaumont, Michel
Cabinet Michel de Beaumont
1, rue Champollion
38000 Grenoble (FR)**

(54) **Procédé d'identification de sons spécifiques**

(57) L'invention concerne un procédé d'identification automatique de sons spécifiques dans un milieu sonore, comprenant les étapes suivantes :

a) enregistrer en continu l'ambiance sonore,
b) former une image spectrale du son enregistré dans un système de coordonnées temps/fréquence,
c) analyser des fenêtres glissantes temporellement de l'image spectrale,
d) sélectionner une famille de filtres dont chacun définit une bande de fréquences et une bande d'énergie,
e) appliquer chacun des filtres à chacune des fenêtres glissantes, et identifier des composantes connexes ou formants, qui sont des fragments de fenêtre constitués de points voisins de fréquences et d'énergies proches,
f) calculer des descripteurs de chaque formant, et
g) calculer une distance entre deux formants en comparant les descripteurs du premier formant à ceux du second formant.

EP 1 473 709 A1

**Description**

La présente invention concerne un procédé d'identification de sons spécifiques.

Elle s'applique en particulier à la réalisation d'un système d'audio-surveillance embarqué et automatique destiné à la détection en temps réel, par télédiagnostic sonore, de situations présentant des risques sécuritaires, dans le contexte de la surveillance simultanée d'un ensemble d'unités fixes ou mobiles.

Cet ensemble d'unités surveillées simultanément par le système d'audio-surveillance peut inclure jusqu'à plusieurs milliers d'unités, et être par exemple de l'un des trois types ci-dessous :

- une flotte de véhicules tels que autobus, camions, automobiles, rames de métro, wagons de chemins de fer, tramways, etc.,
- une flotte d'avions civils, par exemple pour la surveillance sécuritaire en vol des cabines passagers, ou des cockpits de pilotage,
- un ensemble de locaux privés ou publics tels que parkings, bâtiments, entrepôts, immeubles, quais de gare ou de métro, couloirs de métro, etc.

Les situations présentant des risques sécuritaires que le système de télédiagnostic vise à détecter incluent des situations d'intrusions, d'agressions, de crises, de violences, de désordres, et tout particulièrement celles qui mettent en risque la sécurité physique des conducteurs ou des passagers des unités mobiles surveillées, ou encore des usagers des lieux publics ou locaux privés surveillés. Elles incluent aussi des situations susceptibles d'occasionner des dégâts aux véhicules ou locaux surveillés (tels que bris de vitre, effractions, graffitis et tags, dégradations volontaires, vols, etc.).

Dans l'état actuel de la technique, de telles opérations de surveillance sont généralement réalisées par des caméras vidéo. Ceci nécessite qu'un opérateur surveille en permanence des écrans. Eventuellement, dans les systèmes vidéo, il est possible de détecter dans une ambiance dans laquelle normalement il n'y a aucun mouvement qu'un mouvement se produit et alors seulement l'attention de l'opérateur est attirée. Toutefois, ceci est incompatible avec la surveillance d'unités telles que des autobus, des wagons de chemin de fer, des rames de métros, d'autres moyens de transport, ou des locaux en permanence habités, car alors il existe toujours un mouvement et la détection d'une situation à risque nécessite une vigilance toute particulière. Un opérateur ne peut donc surveiller qu'un nombre limité d'écrans.

La présente invention vise à détecter de façon automatique des situations à risque et à fournir des alarmes en temps réel à partir de bruits ou ambiances sonores anormales, qui seraient identifiables à l'écoute par un opérateur humain attentif.

Un autre objet de la présente invention est de prévoir un procédé de détection automatique en temps réel exécutable sur un micro-ordinateur classique.

Un autre objet de la présente invention est de prévoir un tel procédé et un tel système dans lequel une base de données de surveillance peut être établie sans nécessiter l'intervention d'un spécialiste du domaine de l'analyse acoustique.

De façon générale, pour atteindre ces objets, la présente invention prévoit de constituer une base de données sonores correspondant à des situations à risque. Pour cela, dans une phase préparatoire, des enregistrements pris dans les milieux que l'on souhaite étudier (des bus, des métros, des lieux de passage) sont écoutés par des opérateurs. Chaque fois que ceux-ci entendent un bruit correspondant à une situation à risque (bris de vitres, effractions, dégradations, coups de feu, paroles menaçantes), l'opérateur marque l'emplacement où il a entendu le son correspondant (éventuellement provoqué volontairement) et indique quel type de situation il a entendu. Cet opérateur n'a pas besoin d'être un spécialiste de l'acoustique. Il doit simplement être un auditeur attentif. Ensuite, de façon automatique, la présente invention prévoit d'analyser les zones de la bande sonore où la situation à risque a été détectée, d'effectuer des transformations sur ces zones pour en fournir des images spectrales, d'identifier dans ces images spectrales des formants sonores, c'est-à-dire des zones contiguës situées dans des plages déterminées de fréquence et d'énergie, de caractériser ces formants, et de comparer l'ensemble de formants détecté aux divers emplacements où l'opérateur a détecté une situation particulière. Alors, le programme fournit automatiquement par comparaison et sélection, les ensembles de formants spécifiques des zones où le bruit correspondant à un risque déterminé a été entendu. Les ensembles de formants correspondants sont appelés signatures.

Ensuite, une fois que le système est en fonctionnement, les ambiances sonores sont détectées en continu dans les divers lieux que l'on souhaite surveiller et, en temps réel, une conversion temps/fréquence est effectuée et les formants sont extraits. Chaque fois qu'un formant apparaît, il est comparé aux formants de la base de données et l'on détecte si les signatures prédéterminées apparaissent. Dans le cas où une signature apparaît, une alarme est fournie qui peut éventuellement être confirmée de diverses façons avant de déclencher une intervention. Un tel système permet de surveiller simultanément un grand nombre d'unités, pouvant aller jusqu'à plusieurs milliers.

Plus particulièrement, la présente invention prévoit un procédé d'identification automatique de sons spécifiques dans un milieu sonore, comprenant les étapes suivantes :

　　a) enregistrer en continu l'ambiance sonore,
　　b) former une image spectrale du son enregistré dans un système de coordonnées temps/fréquence,

c) analyser des fenêtres glissantes temporellement de l'image spectrale,

d) sélectionner une famille de filtres dont chacun définit une bande de fréquences et une bande d'énergie,

e) appliquer chacun des filtres à chacune des fenêtres glissantes, et identifier des composantes connexes ou formants, qui sont des fragments de fenêtre constitués de points voisins de fréquences et d'énergies proches,

f) calculer des descripteurs de chaque formant, et

g) calculer une distance entre deux formants en comparant les descripteurs du premier formant à ceux du second formant.

La présente invention prévoit aussi un procédé d'identification automatique de la signature d'un type de bruit spécifique dans un enregistrement sonore, comprenant les étapes suivantes :

écouter l'enregistrement et marquer les instants auxquels un bruit spécifique se produit,

appliquer le procédé susmentionné d'identification automatique de sons spécifiques et, à l'étape g), comparer les formants présents dans les fenêtres correspondant sensiblement aux instants marqués, et

relever les formants communs à toutes les fenêtres correspondant aux instants marqués, l'ensemble de ces formants communs constituant ladite signature, deux formants étant considérés comme identiques si leur distance est inférieure à un seuil fixé.

La présente invention prévoit aussi un procédé d'identification automatique de sons spécifiques dans un milieu sonore, consistant à appliquer le procédé susmentionné d'identification automatique de sons spécifiques et, à l'étape g), à comparer les descripteurs des formants de chaque fenêtre glissante à des formants faisant partie d'une signature prédéterminée.

Selon un mode de réalisation de la présente invention, les descripteurs comprennent un descripteur de la forme géométrique GeomC qui est constitué de l'ensemble des points du formant auxquels on a appliqué une translation temporelle pour ramener tous les formants à une même origine ; et au moins un des descripteurs suivants :

D2 : la surface relative SurfC, c'est-à-dire le rapport entre le nombre de points du formant et le nombre de points (L x k) de la fenêtre d'analyse ;

D3 : la durée DuréeC, égale à v-u, où u et v sont respectivement le minimum et le maximum des abscisses t des points du formant ;

D4 : la moyenne des énergies spectrales MeanEnerC ;

D5 : l'écart type des énergies spectrales DispEnerC ;

D6 : la bande de fréquences BFreqC, qui est l'intervalle fréquentiel, c'est-à-dire la différence entre le minimum et le maximum des ordonnées du formant ; et

D7 : la bande d'énergies BEnerC, qui est l'intervalle entre le minimum et le maximum des énergies ($S_{tj}$) des points du formant.

Selon un mode de réalisation de la présente invention, la distance entre formes géométriques de deux formants C et P est évaluée en calculant un écart numérique brut H(C,P) :

$$H(C,P) = a/n(C) + b/n(P)$$

où n(C) et n(P) sont les nombres de points respectifs de C et P, a est le nombre de points de C n'appartenant pas à P, et b est le nombre de points de P n'appartenant pas à C.

Selon un mode de réalisation de la présente invention, la distance entre formes géométriques de deux formants est évaluée en comparant le premier formant à diverses instances du deuxième formant ayant subi des transformations linéaires (translation et dilatation) d'amplitudes modérées et en retenant la distance minimale.

La présente invention prévoit aussi un système d'identification automatique de sons spécifiques dans un milieu sonore, comprenant des moyens d'enregistrement sonore et un micro-ordinateur incorporant un logiciel propre à mettre en oeuvre l'un des procédés susmentionnés.

La présente invention prévoit aussi un système d'identification automatique de sons spécifiques tel que susmentionné, dans chacune d'une pluralité d'unités surveillées et des moyens de transmission d'alarme vers au moins un poste central.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente une image spectrale ;

la figure 2 représente des formants identifiés dans une fenêtre d'analyse d'une image spectrale ; et

les figures 3A, 3B et 3C représentent diverses formes géométriques de formants à comparer.

Dans la présente description, on commencera par exposer un mode de traitement de données sonores utilisé selon la présente invention (partie 1) et un mode de description de formants sonores et de détermination de distance entre formants sonores selon la présente invention (partie 2). Ensuite on décrira l'utilisation des formants sonores définis selon l'invention à la génération de signatures sonores de bruits caractéristiques lors de la réalisation d'une procédure automatique d'apprentissage (partie 3) et l'utilisation de cette base de signatures pour la détection en temps réel de bruits caractéristiques (partie 4). Enfin, on décrira sommairement le matériel utilisé pour la mise en oeuvre de l'invention et diverses variantes possibles (partie 5).

## 1. TRAITEMENT DES DONNÉES SONORES

### 1.1. OBTENTION D'UNE IMAGE SPECTRALE

Un enregistrement sonore est numérisé en temps réel pour générer au fil de l'eau une séquence de pressions acoustiques numérisées, échantillonnées à fréquence élevée, par exemple à 50 kHz.

On applique ensuite à cette séquence de pressions acoustiques numérisées une transformée de Fourier rapide (FFT). Cette opération génère au fil de l'eau, à une cadence plus lente, par exemple de l'ordre de 5 à 10 fois par seconde, une séquence de spectrogrammes instantanés Spec(t), où t désigne l'instant de calcul de Spec(t).

Chaque spectrogramme Spec(t) est un vecteur de dimension "k" fixée par l'utilisateur. k est le plus souvent une puissance de 2, par exemple 512. Ce vecteur est le résultat de l'analyse spectrale du signal sonore sur un intervalle de temps déterminé fixé par l'utilisateur, par exemple de l'ordre de 1/5 à 1/10 de seconde.

Pour la mise en oeuvre temps réel de ce calcul, l'utilisateur sélectionne la bande globale de fréquences sonores à analyser, par exemple entre 1 et 30.000 Hz, et la subdivision de cet intervalle fréquentiel en "k" bandes de fréquences consécutives, par exemple de même largeur, ou encore de largeurs définies par une échelle logarithmique.

La coordonnée numéro "j" ($1<j<k$) du vecteur Spec(t), dénotée ici Stj, représente l'énergie spectrale du signal sonore dans la bande de fréquences numéro j pendant l'intervalle de temps sur lequel est effectué la FFT.

Chaque composante de coordonnée j peut être affectée d'un coefficient de pondération (atténuation ou amplification) avant transmission au traitement suivant.

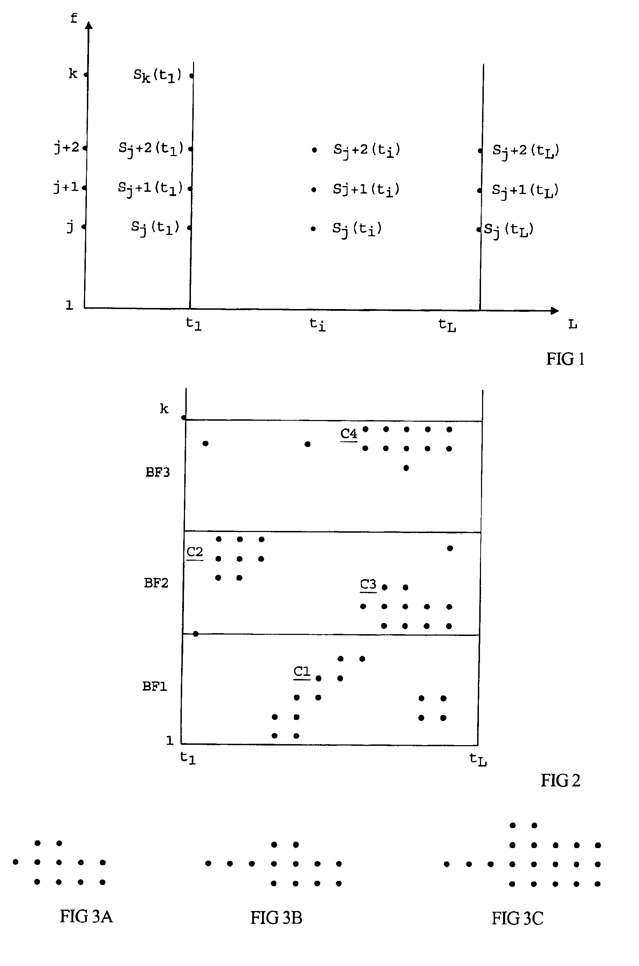

La figure 1 permet de mieux comprendre le résultat obtenu. La séquence temporelle complète des spectrogrammes Spec(t) peut être représentée comme une image appelée "image spectrale" dont les abscisses représentent le temps et dont les ordonnées représentent les k bandes de fréquences. Dans cette image, le point d'abscisse t et d'ordonnée j a une "intensité lumineuse" égale à l'énergie spectrale Stj. On pourrait par exemple afficher les diverses intensités par des couleurs différentes. On notera que cette image spectrale ne sera en fait pas affichée dans la mise en oeuvre du procédé selon l'invention qui est effectuée de façon automatisée sans analyse humaine des spectrogrammes. On se référera toutefois ci-après à cette image spectrale pour simplifier les explications.

### 1.2. EXTRACTION DE FORMANTS À LA VOLÉE

L'invention prévoit ensuite l'analyse informatique temps réel de la séquence des spectrogrammes Spec(t) pour en extraire au fil de l'eau une famille finie de "formants". On appelle ici "formant" un ensemble de points voisins de l'image spectrale d'intensités "proches" dans un sens précisé ci-dessous. Dans l'image spectrale, deux éléments sont dits "voisins" s'ils ont une même ordonnée j et des abscisses consécutives, ou bien s'ils ont une même abscisse t et des ordonnées consécutives.

L'invention prévoit de définir dans l'image spectrale une fenêtre glissante d'analyse d'étendue L (entre des instants t1 et tL) .

Ainsi, à chaque instant s, le procédé prévoit de sélectionner dans l'image spectrale une fenêtre d'analyse incluant toutes les énergies spectrales Stj, pour t compris entre s-L et s, et j compris entre 1 et k.

L'invention prévoit de fixer une liste finie de "sélecteurs énergie/fréquence". Chacun des ces sélecteurs est défini par le choix d'une bande d'énergies spectrales BE et d'une bande de fréquences BF. À chaque instant s, et pour chacun des sélecteurs {BE,BF}, le procédé prévoit de sélectionner dans la fenêtre d'analyse, l'ensemble U des éléments (t,j) tels que :

- l'énergie spectrale Stj appartient à la bande BE, et
- la bande de fréquences j est incluse dans la bande BF.

Puis, par un programme connu de labellisation automatique, on détermine dans l'ensemble U ci-dessus toutes les composantes connexes de cet ensemble, c'est-à-dire les sous-ensembles maximaux de l'ensemble U qui sont formés de points voisins. Chaque composante connexe ainsi déterminée est appelée un formant sonore présent à l'instant s.

Après avoir répété cette procédure pour chacun des sélecteurs ci-dessus, le procédé a donc extrait tous les formants sonores C1,..., Cn présents à l'instant s dans la fenêtre d'analyse. La taille n de cette famille de formants sonores n'est pas fixe et dépend en général de l'instant s.

Pour simplifier les explications, on se référera à la figure 2 qui représente une fenêtre d'analyse divisée horizontalement en trois bandes de fréquences BF1, BF2, BF3. Ces bandes de fréquences ont été représentées comme adjacentes. Il est clair qu'elles pourront être disjointes ou en recouvrement et qu'un nombre de bandes de fréquences beaucoup plus élevé pourra être choisi. Dans chacune de ces bandes de fréquences on a marqué par des points noirs des pixels situés dans une bande d'énergies donnée. Ainsi, il apparaît dans la bande de fréquences BF1 un formant C1, dans la bande de fréquences BF2 deux formants C2 et C3, et dans la bande de fréquences BF3 un formant C4. En outre, dans chacune de ces bandes de fréquences, il apparaît un certain nombre de points parasites ou de très "petits" formants, et le procédé prévoit d'éliminer systématiquement tous les formants de taille (nombre de points) inférieure à un seuil fixé par l'utilisateur.

## 2. CARACTÉRISATION DE FORMANTS SONORES

Pour pouvoir caractériser et comparer des formants, il faut définir des descripteurs de ces formants adaptés à être comparés les uns aux autres, ainsi que des méthodes de comparaison, en gardant à l'esprit que ces descripteurs doivent pouvoir être calculés en temps réel et que les comparaisons doivent également pouvoir être effectuées en temps réel en utilisant un micro-ordinateur courant.

## 2.1. CALCUL DE DESCRIPTEURS DE FORMANTS SONORES

On pourra par exemple choisir pour chaque formant sonore C les sept descripteurs suivants :

D1 : la forme géométrique GeomC constituée de l'ensemble des points du formant auxquels on a appliqué une translation temporelle pour ramener toutes ces formes géométriques à une même origine temporelle;

D2 : la surface relative SurfC, c'est-à-dire le rapport entre le nombre de points du formant et le nombre de points (L x k) de la fenêtre d'analyse;

D3 : la durée DuréeC, égale à v-u, où u et v sont respectivement le minimum et le maximum des abscisses t des points du formant;

D4 : la moyenne des énergies spectrales MeanEnerC ;

D5 : l'écart type des énergies spectrales DispEnerC ;

D6 : la bande de fréquences BFreqC, c'est-à-dire la différence entre le minimum et le maximum des ordonnées du formant ; et

D7 : la bande d'énergies BEnerC, c'est-à-dire l'intervalle entre le minimum et le maximum des énergies Stj du formant.

Les sept descripteurs de formants sonores C ci-dessus constituent une liste de descripteurs {D1, D2, ...D7}.

Le plus complexe D1 = GeomC est un ensemble de points du plan.

Les descripteurs D2...D5 associent au formant C quatre nombres réels SurfC, DuréeC, MeanEnerC, DispEnerC.

Les deux derniers descripteurs D6 et D7 associent au formant C un intervalle fréquentiel BfreqC et un intervalle d'énergie BEnerC.

L'homme de l'art pourra compléter la liste de descripteurs ci-dessus par d'autres descripteurs, ou en remplacer certains par des versions modifiées, pour autant qu'ils soient calculables en temps réel. En particulier toute la gamme des descripteurs introduits en analyse automatique d'images pour décrire de façon générique les parties connexes d'une image, en particulier les textures, les contours de formes, etc. peut être transposée dans le présent contexte pour fournir de nouveaux descripteurs de formants sonores.

## 2.2. CALCUL DE DISTANCES ENTRE FORMANTS SONORES

L'invention prévoit pour chaque descripteur un mode de calcul spécifique permettant d'évaluer pour tout couple C et P de formants sonores (pas nécessairement présents au même instant s) une distorsion ou distance numérique d entre les formants C et P. Le nombre positif d ainsi calculé est d'autant plus petit que les descripteurs D(C) et D(P) sont plus similaires.

Le paragraphe qui suit explicite les calculs de distance prévus selon un mode de réalisation de la présente invention pour les sept descripteurs proposés ci-dessus.

### (a) Distance entre formes géométriques

Pour deux formants C et P, on prévoit de calculer un écart numérique brut H(C,P) entre les formes géométriques de C et P, en posant

$$H(C,P) = a/n(C) + b/n(P)$$

où n(C) et n(P) sont les nombres de points respectif de C et P, a est le nombre de points de C n'appartenant pas à P, et b est le nombre de points de P n'appartenant pas à C.

Toutefois, si l'on compare par exemple le formant C3, présenté comme ramené à une origine en figure 3A aux formants représentés en figures 3B et 3C, l'opération ci-dessus fournira un écart brut H relativement élevé entre les divers formants. En fait, le formant de la figure 3B est assez proche du formant de la figure 3A sauf qu'il comprend du côté gauche deux points supplémentaires qui sont vraisemblablement des points parasites et le formant de la figure 3C est similaire à celui de la figure 3A mais dilaté. En fait, ces trois formants sont assez proches. Pour pouvoir faire ressortir la similarité entre ces formants, la présente invention prévoit de comparer le formant de base aux autres formants en appliquant à ce formant des transformations linéaires (translation et dilatation) d'amplitudes modérées. L'écart brut H est alors calculé plusieurs fois, en remplaçant dans H(C,P) le formant C par des transformés linéaires de C (C', C'', ...), et la distance D(C,P) entre les formes géométriques de C et P est déterminée comme le minimum de tous les écarts bruts H(C',P), H(C'',P), etc. Diverses familles de déformations modérées de C peuvent être fixées par l'utilisateur, sans changer le principe ci-dessus.

(b) Distance liée aux surfaces

La distance entre les surfaces de C et de P peut s'exprimer par :

DistSurf (C, P) = valeur absolue de [SurfC - SurfP]

(c) Distance liée aux durées

La distance entre les durées de C et P peut s'exprimer par :

DistDurée(C,P) = V/D

où V = valeur absolue de [DuréeC - DuréeP], et
D = DuréeC + DuréeP

(d) Distance liée à l'énergie moyenne

La distance entre les énergies moyennes de C et P peut s'exprimer par :

DistMean(C,P) = W/M

où W = valeur absolue de [MeanC - MeanP] et M = MeanC + MeanP

(e) Distance liée à la dispersion d'énergie

La distance entre les dispersions d'énergies de C et P peut s'exprimer par :

DistDisp(C,P) = d1/d2 + d2/d1 - 2

où d1 = DispC et d2 = DispP

(f) Distance liée aux bandes de fréquences

La distance entre les bandes de fréquences BFreqC et BFreqP de C et P peut s'exprimer par :

DistBFreq(C,P) = H(BFreqC,BFreqP) = u/a + v/b

avec les notations suivantes :

a et b : longueurs des intervalles BFreqC et BFreqP,

u : la longueur du segment résiduel lorsqu'on enlève à BFreqC tous les points appartenant à BFreqP,
v : la longueur du segment résiduel lorsqu'on enlève à BFreqP tous les points appartenant à BFreqC.

(g) Distance liée aux bandes d'énergies

La distance entre les bandes d'énergies BEnerC et BEnerP de C et P peut s'exprimer par :

DistBEner(C,P) = H(BEnerC,BEnerP)

où la fonction H est définie comme précédemment.

Distance globale entre deux formants sonores

On peut donc définir une distance numérique globale Dist(C,P) entre deux formants sonores C et P en sommant les sept distorsions partielles définies ci-dessus.
Dans une variante, l'utilisateur du procédé peut pondérer les sept différentes distorsions définies ci-dessus par des coefficients multiplicatifs fixes, avant d'effectuer la sommation fournissant Dist(C,P).

3. PROCÉDURE AUTOMATIQUE D'APPRENTISSAGE

Le procédé prévoit, dans une phase préparatoire hors ligne, précédant la mise en oeuvre du procédé de détection et d'identification de phénomènes sonores en temps réel, de lancer l'analyse informatique automatisée d'une base massive d'enregistrements sonores numérisés.
Les résultats de cette phase d'apprentissage automatique fournissent le calibrage d'un ensemble de paramètres internes du logiciel de télédiagnostic sonore temps réel, sous forme de fichiers informatiques.
La mise en oeuvre de la phase d'apprentissage automatique prévoit d'abord un prétraitement de la base d'enregistrements par un opérateur humain, pour l'étiqueter en termes de contenu sonore lors d'une écoute méthodique.
Lors de l'écoute de chaque enregistrement, un opérateur marque d'une étiquette informatisée toutes les phases pendant lesquelles il a identifié un bruit typique susceptible d'être un bruit à risque. Cette étiquette indique d'une part l'emplacement sur la bande auquel l'opérateur a détecté le bruit recherché et d'autre part le type de bruit concerné. Cette étiquette est automatiquement associée à l'image spectrale du bruit concerné. La tâche de l'opérateur est alors normalement terminée. On notera qu'elle n'implique aucune connaissance particulière du traitement informatique des sons.
A partir de cette base étiquetée, on recherche dans un premier temps des formants prototypes puis des signatures sonores caractéristiques de bruits spécifiques.

### 3.1 FORMANTS PROTOTYPES

Pour rechercher des formants prototypes, on compare les unes aux autres les diverses zones de l'image spectrale voisines des zones dans lesquelles on a détecté un type de bruit bien déterminé et on recherche les formants "communs" à ces diverses zones. On notera qu'avant d'effectuer cette recherche, si on associe à l'opérateur ayant écouté les bandes un spécialiste de l'acoustique, ce dernier pourra spécifier une liste de couples bandes de fréquences et bandes d'énergies dans lesquels rechercher préférentiellement les formants correspondants de la façon la plus pertinente à chaque phénomène sonore à risque. Toutefois, si l'opérateur ne dispose pas de ce type d'expertise, le procédé prévoit de sélectionner tous les couples {BF,BE} d'intervalles réalisant un pavage régulier du plan (en fréquence et en énergie) de l'image spectrale. Des pavages à plusieurs échelles peuvent aussi être utilisés simultanément.

Ensuite, pour la recherche et l'identification des formants "communs" à toutes les zones dans lesquelles on estime qu'il existe un même type de bruit à risque, on utilisera le procédé de caractérisation de formants sonores et de calcul de descripteurs et de distances exposé dans la partie 2 de la présente description. Le point essentiel du procédé est ici de décider que deux formants présents en deux zones quelconques de l'image spectrale constituent deux instances d'un même "formant prototype" dès lors que leur distance DIST est inférieure à un "seuil de distance".

Pour la comparaison, un informaticien pourra donc sélectionner des seuils de distance entre formants. On pourra commencer par exemple par fixer des seuils assez larges, puis rétrécir progressivement ces seuils jusqu'à obtenir des résultats significatifs.

### 3.2 SIGNATURES SONORES

Après avoir détecté des formants prototypes de la façon indiquée précédemment, on recherche l'ensemble des formants prototypes correspondant à un type de bruit déterminé. On obtient ainsi pour chaque bruit spécifique une ou plusieurs "signatures sonores" constituées d'un ensemble {P1, P2 ...Pr} de formants prototypes, la valeur r pouvant varier d'une signature à l'autre.

### 4. DÉTECTION TEMPS RÉEL DE PHÉNOMÈNES SONORES

A la suite de l'apprentissage, on a fixé la famille de classes de phénomènes sonores à détecter, et construit par apprentissage la base de signatures sonores correspondante.

Cette base de signatures sonores incluant les formants prototypes et leurs descripteurs est mémorisée dans chacun des micro-ordinateurs associés aux unités surveillées. On met alors en oeuvre pour chaque fenêtre d'analyse le procédé de comparaison selon l'invention entre les formants sonores détectés d'un enregistrement courant et les formants sonores prototypes. L'utilisateur sélectionne un seuil de distance entre formant prototype et formant observé. On peut ainsi déterminer si une signature correspondant à un ensemble de formants sonores déterminés est présente, partiellement ou en totalité, dans une fenêtre d'analyse. Pour chaque classe de bruit, c'est-à-dire pour chaque signature, le procédé prévoit en outre de calculer le coefficient de présence d'un phénomène sonore d'une classe considérée dans une fenêtre d'analyse. Le coefficient de présence ou seuil de confiance est compris entre 0 et 100% et dépend des seuils choisis et du nombre de formants identifiés avec certitude dans une signature. Divers types de calculs de probabilité de présence pourront être envisagés de façon classique.

### 5. PRINCIPAUX DISPOSITIFS ET VARIANTES DE L'INVENTION

### 5.1 ÉLÉMENTS EMBARQUÉS

A bord de chaque unité surveillée, l'invention prévoit l'installation de matériels embarqués identiques, incluant :

- des microphones dédiés à l'enregistrement permanent ou intermittent des ambiances sonores à bord de l'unité surveillée ; ces microphones sont reliés, par transmission filaire ou hertzienne, à un micro-ordinateur embarqué ;

- un micro-ordinateur embarqué, typiquement sans écran, par exemple de type PC industriel compact, incluant une ou plusieurs cartes d'acquisition audio, dédiées à la numérisation temps réel des enregistrements sonores transmis par les microphones, et incluant d'autre part une ou plusieurs cartes calcul avec processeurs rapides, et éventuellement un disque dur à forte capacité ; et

- un logiciel de télédiagnostic sonore temps réel, installé sur le micro-ordinateur embarqué, chargé d'analyser en ligne le flot d'enregistrements sonores numérisés, afin de détecter les ambiances sonores anormales, de les identifier, et de déclencher la transmission d'alarmes correspondantes.

À rythme régulier, toutes les secondes par exemple, le logiciel de télédiagnostic sonore analyse automatiquement les derniers enregistrements sonores reçus, calcule un diagnostic, et, si un phénomène sonore à risque est détecté, déclenche automatiquement la transmission d'un message d'alarme, en précisant le type d'alarme détectée avec identification du type d'événement à risque correspondant (explosion, coup de feu, cris, bris de vitre, etc).

## 5.2. ÉQUIPEMENT CENTRALISÉ

L'invention prévoit un système de transmission d'alarmes depuis chacune des unités surveillées vers un ou plusieurs postes centraux de surveillance, où les alarmes déclenchées et identifiées par les matériels embarqués sont réceptionnées sur ordinateurs fixes ou récepteurs mobiles pour affichage et lecture par des opérateurs humains, chargés de prendre les décisions d'intervention nécessaires.

Le système de transmission d'alarmes peut être implémenté de diverses façons, par exemple par transmission GSM vers satellite en orbite, qui retransmet ensuite vers les postes centraux de surveillance pour réception et affichage, par transmission hertzienne sur bandes de fréquences réservées au SDS, avec réception et affichage sur téléphones mobiles, ordinateurs portables ou ordinateurs fixes, ou par tout autre système capable d'assurer ces transmissions d'alarmes en temps réel.

## 5.3. FONCTIONNALITÉ DE "LEVÉE DE DOUTE"

A titre d'option, la présente invention prévoit une fonctionnalité complémentaire d'aide à la levée de doute sur chaque transmission d'alarmes, afin d'aider les opérateurs humains affectés aux postes centraux de surveillance, dans la tâche de validation directe de l'alarme, tâche qui consiste à confirmer ou préciser le diagnostic d'alarme fourni par le système.

Dans ce but, le logiciel de télédiagnostic embarqué implémente et réactualise en permanence, par stockage sur disque dur embarqué à bord de chaque unité surveillée, la mémorisation informatique d'une dernière séquence d'enregistrements sonores provenant des microphones, d'une durée choisie par les utilisateurs du système d'audio-surveillance, de l'ordre de 15 à 30 secondes par exemple. Ce stockage peut impliquer une compression logicielle des données sonores mémorisées.

Lors de chaque alarme transmise par le système d'audio-surveillance, le logiciel de télédiagnostic embarqué retransmet vers les postes centraux de surveillance la dernière séquence de son enregistrée et mémorisée à bord de l'unité surveillée concernée. Ces retransmissions sonores utilisent par exemple le protocole GPRS pour transmission satellitaire. Ces retransmissions sonores peuvent aussi être implémentées de diverses autres façons, par exemple par transmission hertzienne sur bandes de fréquences réservées au SDS, avec réception sur téléphone mobile, ordinateur portable, ou ordinateur fixe.

A titre d'autre option, la présente invention prévoit un renforcement de la fonction de levée de doute par installation à bord de chaque unité surveillée, d'un système de caméras vidéo numériques ou analogiques embarquées, capable d'enregistrer et de stocker en permanence sur mémoires informatisées la dernière séquence enregistrée.

Dès qu'une alarme est déclenchée par le logiciel de télédiagnostic sonore à bord d'une unité surveillée, un programme informatique standard sous-échantillonne à un taux suffisant (par exemple 2 à 5 images/seconde) les dernières secondes de vidéo enregistrées, puis lance la compression informatique des images conservées, et les transmet ensuite en temps réel vers les postes centraux de surveillance, via communication satellitaire de type GPRS par exemple, ou encore via une transmission hertzienne.

Bien entendu, la présente invention est susceptible de diverses variantes et modifications qui apparaîtront à l'homme de l'art. En particulier, le type de sons à détecter et le type d'emplacements ou de mode de transport à surveiller peut être très divers.

## Revendications

1. Procédé d'identification automatique de sons spécifiques dans un milieu sonore, comprenant les étapes suivantes :

   a) enregistrer en continu l'ambiance sonore,
   b) former une image spectrale du son enregistré dans un système de coordonnées temps/fréquence,
   c) analyser des fenêtres glissantes temporellement de l'image spectrale,
   d) sélectionner une famille de filtres dont chacun définit une bande de fréquences et une bande d'énergie,
   e) appliquer chacun des filtres à chacune des fenêtres glissantes, et identifier des composantes connexes ou formants, qui sont des fragments de fenêtre constitués de points voisins de fréquences et d'énergies proches,
   f) calculer des descripteurs de chaque formant, et
   g) calculer une distance entre deux formants en comparant les descripteurs du premier formant à ceux du second formant.

2. Procédé d'identification automatique de la signature d'un type de bruit spécifique dans un enregistrement sonore, comprenant les étapes suivantes :

   écouter l'enregistrement et marquer les instants auxquels un bruit spécifique se produit,
   appliquer le procédé selon la revendication 1 et, à l'étape g), comparer les formants présents dans les fenêtres correspondant sensiblement aux instants marqués, et
   relever les formants communs à toutes les fenêtres correspondant aux instants marqués, l'ensemble de ces formants communs constituant ladite signature, deux formants étant considérés comme identiques si leur distance est inférieure à un seuil fixé.

3. Procédé d'identification automatique de sons spécifiques dans un milieu sonore, consistant à appliquer le procédé selon la revendication 1 et, à l'étape g), à comparer les descripteurs des formants de chaque fenêtre glissante à des formants faisant partie d'une signature prédéterminée.

4. Procédé selon la revendication 1, dans lequel les descripteurs comprennent un descripteur (D1) de la forme géométrique GeomC qui est constitué de l'ensemble des points du formant auxquels on a appliqué une translation temporelle pour ramener tous les formants à une même origine ; et au moins un des descripteurs suivants :

> D2 : la surface relative SurfC, c'est-à-dire le rapport entre le nombre de points du formant et le nombre de points (L x k) de la fenêtre d'analyse;
> D3 : la durée DuréeC, égale à v-u, où u et v sont respectivement le minimum et le maximum des abscisses t des points du formant;
> D4 : la moyenne des énergies spectrales MeanEnerC;
> D5 : l'écart type des énergies spectrales DispEnerC;
> D6 : la bande de fréquences BFreqC, qui est l'intervalle fréquentiel, c'est-à-dire la différence entre le minimum et le maximum des ordonnées du formant ; et
> D7 : la bande d'énergies BEnerC, qui est l'intervalle entre le minimum et le maximum des énergies ($S_{tj}$) des points du formant.

5. Procédé selon la revendication 4, dans lequel la distance entre formes géométriques de deux formants C et P est évaluée en calculant un écart numérique brut H(C,P) :

$$H(C,P) = a/n(C) + b/n(P)$$

où n(C) et n(P) sont les nombres de points respectifs de C et P, a est le nombre de points de C n'appartenant pas à P, et b est le nombre de points de P n'appartenant pas à C.

6. Procédé selon la revendication 5, dans lequel la distance entre formes géométriques de deux formants est évaluée en comparant le premier formant à diverses instances du deuxième formant ayant subi des transformations linéaires (translation et dilatation) d'amplitudes modérées et en retenant la distance minimale.

7. Système d'identification automatique de sons spécifiques dans un milieu sonore, comprenant des moyens d'enregistrement sonore et un micro-ordinateur incorporant un logiciel propre à mettre en oeuvre le procédé selon l'une quelconque des revendications 1 à 6.

8. Système de télésurveillance comprenant un système d'identification automatique de sons spécifiques selon la revendication 7, dans chacun d'une pluralité d'unités surveillées et des moyens de transmission d'alarme vers au moins un poste central.

FIG 1

FIG 2

FIG 3A

FIG 3B

FIG 3C

**Office européen des brevets**

# RAPPORT DE RECHERCHE EUROPEENNE

Numéro de la demande

EP 04 35 4019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LOBANOV B ET AL: "SPEAKER AND CHANNEL-NORMALIZED SET OF FORMANT PARAMETERS FOR TELEPHONE SPEECH RECOGNITION" 6TH EUROPEAN CONFERENCE ON SPEECH COMMUNICATION AND TECHNOLOGY. EUROSPEECH '99, vol. VOL. 1 OF 6, 5 septembre 1999 (1999-09-05), - 9 septembre 1999 (1999-09-09) pages 331-334, XP001076117 BUDAPEST, HUNGARY * abrégé; figures 1-4 * | 1-8 | G10L17/00 G08B13/16 |
| X | US 2002/010578 A1 (PADMANABHAN MUKUND) 24 janvier 2002 (2002-01-24) * abrégé; figures 1,4 * | 1-8 | |
| A | US 2002/107694 A1 (LERG GEORGE H) 8 août 2002 (2002-08-08) * abrégé; figures 1,4A-B,5-7 * | 1-8 | |
| A | WUNNAVA S V ET AL: "Web based remote security system (WRSS) model development" PROCEEDINGS IEEE SOUTHEASTCON 2000. PREPARING FOR THE NEW MILLENNIUM. NASHVILLE, TN, APRIL 7-9, 2000, IEEE SOUTHEASTCON, NEW YORK, NY: IEEE, US, 7 avril 2000 (2000-04-07), pages 379-382, XP002174274 ISBN: 0-7803-6313-2 * abrégé * | 1-8 | DOMAINES TECHNIQUES RECHERCHES (Int.Cl.7) G10L G08B |
| A | US 5 839 109 A (IWAMIDA HITOSHI) 17 novembre 1998 (1998-11-17) * abrégé; figures 1,2,4A-B * | 1-8 | |

Le présent rapport a été établi pour toutes les revendications

| Lieu de la recherche | Date d'achèvement de la recherche | Examinateur |
|---|---|---|
| La Haye | 14 juillet 2004 | Quélavoine, R |

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 04 35 4019

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-07-2004

| Document brevet cité au rapport de recherche | Date de publication | Membre(s) de la famille de brevet(s) | Date de publication |
|---|---|---|---|
| US 2002010578 A1 | 24-01-2002 | AUCUN | |
| US 2002107694 A1 | 08-08-2002 | US 2002008619 A1 | 24-01-2002 |
| | | US 6288643 B1 | 11-09-2001 |
| | | US 2003214405 A1 | 20-11-2003 |
| | | US 2004075561 A1 | 22-04-2004 |
| | | US 2004036602 A1 | 26-02-2004 |
| | | CA 2379540 A1 | 14-12-2000 |
| | | EP 1194909 A1 | 10-04-2002 |
| | | EP 1286319 A2 | 26-02-2003 |
| | | AU 5597900 A | 28-12-2000 |
| | | WO 0075899 A1 | 14-12-2000 |
| | | US 6281792 B1 | 28-08-2001 |
| | | US 6281787 B1 | 28-08-2001 |
| US 5839109 A | 17-11-1998 | JP 7084592 A | 31-03-1995 |

EPO FORM P0460